# EUROPÄISCHE PATENTSCHRIFT

(11) **EP 2 861 388 B1**
(45) Veröffentlichungstag und Bekanntmachung des Hinweises auf die Patenterteilung: **06.06.2018**
(21) Anmeldenummer: 13732850.6
(22) Anmeldetag: 11.06.2013
(51) Int. Cl.: B25J 15/00, B25J 15/02, B25J 15/08, B25J 15/10, B25J 15/12

(54) **GREIFER**
GRIPPER
DISPOSITIF DE PREHENSION

(30) Priorität: 13.06.2012 DE 102012209921
(43) Veröffentlichungstag der Anmeldung: 22.04.2015
(73) Patentinhaber: Framatome GmbH, 91052 Erlangen (DE)
(72) Erfinder: KRÄMER, Georg, 91346 Wiesenttal (DE); MEIER-HYNEK, Konrad, 91074 Herzogenaurach (DE); NEHR, Lothar, 96103 Hallstadt (DE)
(74) Vertreter: Schlögl, Markus
(86) Internationale Anmeldenummer: PCT/EP2013/062044
(87) Internationale Veröffentlichungsnummer: WO 2013/186219

(56) Entgegenhaltungen:
- FR-A1- 2 199 525
- GB-A- 2 080 243
- US-A- 1 169 004
- US-A- 1 317 500
- US-A1- 2002 084 660

## Beschreibung

Die Erfindung betrifft einen Greifer zum Heben und Senken von Lasten. Unter normalen Bedingungen sind für eine Bedienperson Last und Greifer sichtbar, so dass die Bedienung des Greifers, also das Ankoppeln an einer Last und das Abkoppeln bzw. Freigeben der Last, wenn diese ihre vorgesehene Sollposition erreicht hat, bei der sie auf einer Unterlage abgesetzt ist, keine besonderen Probleme bereitet. Anders ist dies, wenn die örtlichen Gegebenheiten das Einsehen des An- oder Abkoppelvorgangs nicht erlauben. Solche Situationen sind bei Transportaufgaben in Kernkraftwerken häufig anzutreffen, wenn beispielsweise eine Last in einem mit bis zu 12 m hoch mit Wasser gefüllten Brennelemente-Lagerbecken transportiert, d.h. abgesenkt und/oder angehoben werden soll. Wenn zusätzlich noch beengte räumliche Verhältnisse vorliegen, ist eine Bedienung per Sicht ausgeschlossen. Eine solche Situation liegt beispielsweise vor, wenn Risse in der Wand eines Brennelement-Lagerbeckens abgedichtet werden sollen und vor dieser Wand in Lagergestellen gehaltene Brennelemente positioniert sind, so dass zwischen diesen und der Wand nur noch ein enger Spalt vorhanden ist.

Aus den Druckschriften FR 2 199 525 A1, GB 2 080 243 A und US 2002/084660 A1 sind beispielsweise Greifer zum Heben und Senken verschiedener Lasten bekannt, welche jeweils bewegbare Elemente aufweisen, die zum Greifen einer Last in eine Öffnung der Last einführbar und darin in eine Greifstellung bewegbar sind, um die Last an dem Greifer zu fixieren.

Davon ausgehend ist es die Aufgabe der Erfindung, einen Greifer der eingangs genannten Art vorzuschlagen, mit dem sich Lasten an nicht einsehbaren Stellen an einer vorgegebenen Höhenposition absetzen lassen.

Diese Aufgabe wird durch einen Greifer mit den Merkmalen des Anspruchs 1 gelöst. Er umfasst ein zum Ankoppeln an eine Last dienendes Koppelteil und ein zum Verbinden mit einem Anschlagmittel, beispielsweise einem Seil oder eine Stange, dienendes Verbindungsteil. Die beiden Teile sind nun nicht starr miteinander verbunden. Vielmehr ist das Verbindungsteil am Koppelteil längs einer Bewegungsachse, die beim Heben oder Senken einer Last in einer Vertikalrichtung verläuft, zwischen einer ersten Endlage und einer zweiten Endlage beweglich geführt. In der ersten Endlage sind die von einander wegweisenden Enden von Verbindungsteil und Koppelteil weiter voneinander entfernt als in der zweiten Endlage.

Um eine Last am Greifer fixieren zu können, sind am Koppelteil wenigstens zwei Klinkenelemente vorhanden, die zwischen einer Greifstellung, in der sie mit einer Hintergriffsfläche ein Gegenelement der Last hintergreifen, und einer Freigabestellung, in der sie das Gegenelement freigeben bzw. nicht hintergreifen, beweglich sind. Zur Betätigung der Klinkenelemente wird die axiale Beweglichkeit des Verbindungsteils bzw. die relative Beweglichkeit von Verbindungsteil und Koppelteil ausgenutzt. Das Verbindungsteil ist mit dem wenigstens einen Klinkenelement über wenigstens ein Getriebe derart verbunden bzw. bewegungsgekoppelt, dass sich in der ersten Endlage des Verbindungsteils die Klinkenelemente in ihrer Greifstellung und in seiner zweiten Endlage des Verbindungsteils in ihrer Freigabestellung befinden.

Um eine möglichst gleichmäßige Verteilung der Gewichtskraft der Last auf den Greifer zu bewirken, sind die wenigstens zwei Klinkenelemente bezüglich eines eine sich parallel zur Bewegungsachse erstreckende Mittellängsachse des Greifers konzentrisch umfassenden gedachten Kreises in dessen Umfangsrichtung, insbesondere gleichmäßig, voneinander beabstandet angeordnet.

Des Weiteren weisen die Klinkenelemente in der Greifstellung einen größeren Abstand zur Mittellängsachse auf als in der Freigabestellung. Die Bewegungskopplung zwischen Verbindungsteil und Koppelteil bewirkt, dass die Klinkenelemente zwischen der Greif- und der Freigabestellung bewegbar sind. Damit ein Ankoppeln an die Last und eine Freigabe der Last erfolgen können, muss die Bewegung der Klinkenelemente quer zur Bewegungsachse des Verbindungsteils verlaufen oder zumindest eine in dieser Richtung verlaufende Bewegungskomponente aufweisen. Mit anderen Worten befinden sich die Klinkenelemente in der Greif- und Freigabestellung an unterschiedlichen Radialpositionen hinsichtlich der Mittellängsachse. Sie bewegen sich somit, wenn sie in ihre Greifstellung bewegt werden von der Mittellängsachse weg. Das mit den Klinkenelementen zusammenwirkende Gegenelement ist z.B. der Öffnungsrand einer oberseitig an der Last vorhandenen Aufnahmeöffnung. Da die Klinkenelemente in der Freigabestellung näher an der Mittelllängsachse angeordnet sind als in der Greifstellung, kann bei entsprechender Anpassung der Öffnungsweite oder des Öffnungsdurchmessers der Aufnahmeöffnung das Koppelteil mit sich in der Freigabestellung befindlichen Klinkenelementen aus der Aufnahmeöffnung herausgezogen und umgekehrt im Fall des Ankoppelns des Greifers an die Last in die Aufnahmeöffnung eingeführt werden, wobei daran anschließend die Klinkenelemente in ihre Greifstellung gebracht werden, in der sie mit ihrer Hintergriffsfläche den Öffnungsrand auf seiner nach unten weisenden Seite hintergreifen.

Aufgrund der geschilderten Ausgestaltung ergibt sich die Möglichkeit, dass der Greifer selbsttätig seine Freigabestellung einnimmt, wenn die Last auf einer Unterlage abgestellt wird, also ihre Sollposition erreicht hat. Es muss lediglich dafür Sorge getragen werden, dass das Verbindungsteil in Vertikalrichtung gegen das Koppelteil gefahren wird und dadurch die wenigstens zwei Klinkenelemente des Koppelteils in ihre Freigabestellung bewegt werden. Im Gegensatz zu einer ferngesteuerten Bedienung des Greifers z.B. über eine Funk- oder Kabelverbindung sind Maßnahmen zur Detektion der Sollposition der Last, etwa eine Überwachung mit Kameras oder mit Hilfe von Positionssensoren, nicht erforderlich.

Eine Einführung des Koppelteils in die Aufnahmeöffnung ist weiterhin dadurch erleichtert, dass der vom Verbindungsteil weg weisende Endabschnitt des Koppelteils in Form eines sich zu seinem Freiende verjüngenden, über die Enden der Klinkenelemente mit einem Überstand in Richtung der Mittellängsachse hinaus ragenden Zentrierbolzens ausgestaltet ist.

Bei einer bevorzugten Ausgestaltung weist der Zentrierbolzen in Umfangsrichtung verteilte Ausnehmungen auf, in welche jeweils ein Klinkenelement in seiner Freigabestellung zumindest teilweise eintaucht.

Bei einer bevorzugten Ausführungsvariante ist das Verbindungsteil in seine erste Endlage vorgespannt. Auf diese Weise werden die wenigstens zwei Klinkenelemente sicher in ihrer Greifstellung gehalten. Damit sie ihre Freigabestellung einnehmen können, muss die Vorspannung überwunden werden. Die dazu erforderliche Kraft kann durch die Gewichtskraft des Verbindungsteils aufgebracht werden, d.h. das Gewicht des Verbindungsteils ist so gewählt, dass die von ihm bei vertikaler Ausrichtung der Bewegungsachse bzw. der Mittellängsachse des Greifers ausgeübte Gewichtskraft inklusive eine Anschlagmittels, eines Seils o.dgl., größer ist als die Vorspannkraft. Denkbar ist aber auch, dass das Verbindungsteil an einem starren Anschlagmittel wie einer Stange fixiert ist, so dass über das starre Element eine die Vorspannung überwindende Kraft auf das Verbindungsteil ausgeübt werden kann. Die Vorspannung wird vorzugsweise durch ein sich einerseits am Koppelteil und andererseits am Verbindungsteil abstützendes Federelement, vorzugsweise eine Schraubendruckfeder, bewerkstelligt. Die Relativbewegung zwischen Verbindungs- und Koppelteil im Falle der Lastfreigabe erfordert, dass das Koppelteil axialfest gehalten wird. Zu diesem Zweck ist bei einer bevorzugten Ausführungsvariante am Koppelteil ein eine Anschlagfläche aufweisender Anschlag angeordnet. Dieser ist so ausgestaltet und positioniert, dass er bei auf einer Unterlage ruhender Last und fortgesetzter Abwärtsbewegung des Greifers mit seiner Anschlagfläche gegen die Last stößt. Ab diesem Moment ist das Koppelteil gegenüber dem Verbindungsteil axial fixiert, so dass das sich in Richtung der Bewegungsachse nach unten in seine zweite Endlage bewegende Verbindungsteil unter Zwischenschaltung des Getriebes die wenigstens zwei Klinkenelemente in ihre Freigabestellung bewegt. Die Freigabe erfolgt somit von allein, sobald sich die Last auf einer Unterlage abstützt, sich in ihrer Sollposition befindet, und der Greifer noch ein Stück weit vertikal nach unten bewegt wird.

Bei einer weiteren bevorzugten Ausführungsvariante wird das Ankoppeln dadurch erleichtert, dass die Klinkenelemente an ihrem vom Verbindungsteil weg weisenden Ende eine Betätigungsschräge aufweisen, deren Schrägstellung so gewählt ist, dass bei ihrer Beaufschlagung mit einer nach oben und in Bewegungsrichtung wirkenden Kraft die Klinkenelemente in ihre Freigabestellung bewegt werden. Im Falle einer Aufnahmeöffnung, in welche das Koppelteil bzw. die Klinkenelemente eingeführt werden, erfolgt die Kraftbeaufschlagung beim Auftreffen der Betätigungsschrägen auf den Öffnungsrand der Aufnahmeöffnung.

Ein zur Bewegungskoppelung von Verbindungsteil und Klinkenelement dienendes Getriebe, welches vorzugsweise zwischen jedem Klinkenelement und dem Verbindungsteil vorhanden ist, ist so gestaltet, dass die lineare Bewegung des Verbindungsteils in eine Bewegung der Klinkenhebel umgewandelt wird, die quer zur Bewegungsachse bzw. zur Mittellängsachse des Greifers verläuft oder eine Bewegungskomponente mit einer solchen Richtung aufweist, insbesondere eine Drehbewegung. Hierzu dient insbesondere ein Koppel- bzw. Hebelgetriebe. Dieses bildet im Falle einer Drehbewegung der Klinkenelemente zusammen mit dem Verbindungsteil ein Schubkurbelgetriebe.

Bei einer die Handhabung des Greifers verbessernden Ausgestaltung ist eine Rasteinrichtung vorgesehen, welche das Verbindungsteil in seiner zweiten Endlage lösbar - am Koppelteil - fixiert. Mit anderen Worten wird das Verbindungsteil in einer lösbaren Weise axialfest am Koppelteil fixiert. Wenn eine Last auf einer Unterlage abgesetzt wird, ist zur Abkoppelung des Greifers von der Last zunächst ein Vorschub des Verbindungsteils zur Last hin erforderlich, um die Klinkenelemente in ihre Freigabestellung zu bewegen. Wenn diese erreicht ist, erfolgt die o.g. Arretierung. Der Greifer kann dann von der Last entfernt werden, indem er vertikal nach oben bewegt wird. Die Rasteinrichtung umfasst ein am Koppelteil oder am Verbindungsteil - in Bezug auf die Mittellängsachse des Greifers oder auf die Bewegungsachse - radial beweglich gelagertes Rastelement, welches in der zweiten Endlage in eine Ausnehmung des jeweils anderen Teils eingreift. Dabei ist bei besonders bevorzugten Ausführungsvarianten das Rastelement in Eingriffsrichtung vorgespannt. Vorteil dabei ist, dass die Arretierung der Klinkenelemente in ihrer Freigabestellung völlig selbststätig erfolgt, so dass auch hier keine Kontroll- oder Überwachungsmaßnahmen, etwa Kameras oder eine Lagesensorik erforderlich sind.

Auf sonstige, in weiteren Unteransprüchen angegebene vorteilhafte Ausgestaltungen wird im Zuge der folgenden Beschreibung der Erfindung eingegangen, welche auf die beigefügten Zeichnungen Bezug nimmt. Es zeigen:
Fig. 1 eine perspektivische Darstellung eines Greifers,

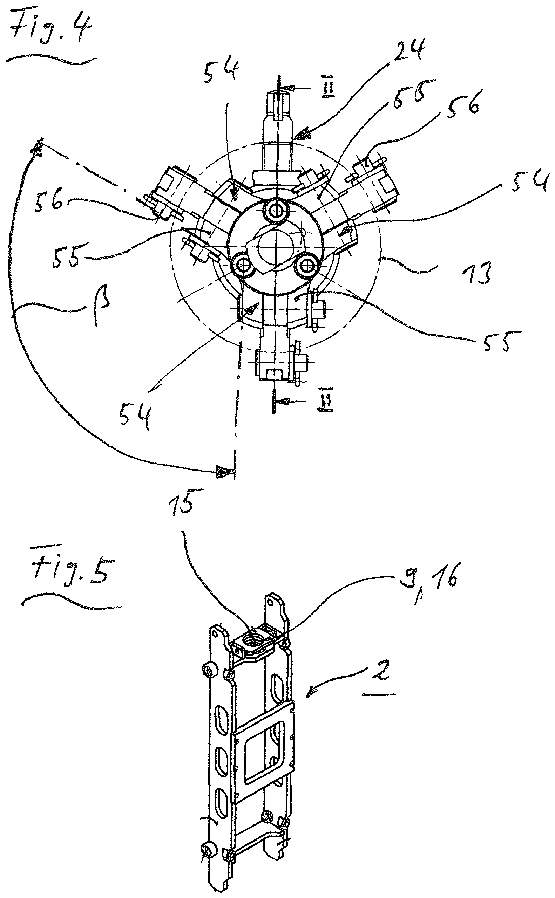

Fig. 2 einen Längsschnitt entsprechend Linie II-II in Fig.4, wobei der Greifer an eine Last angekoppelt ist,
Fig. 3 eine Fig. 2 entsprechende Darstellung, wobei aber der Greifer in einer Situation gezeigt ist, in der er die Last freigibt,
Fig. 4 eine Draufsicht in Richtung des Pfeils IV in Fig. 1,
Fig. 5 einen zur Reparatur von Rissen in Brennelementlagerbecken einsetzbaren Schlitten als Beispiel für eine Last.

Der in den Abbildungen gezeigte Greifer 1 umfasst ein zum Ankoppeln an eine Last 2 dienendes Koppelteil 3 und ein zum Verbinden mit einem Anschlagmittel, etwa einem Seil oder einer Stange dienendes Verbindungsteil 4. Dazu ist am Freiende des insgesamt etwa stabförmig ausgebildeten Verbindungsteils 4 eine Öse 11 vorhanden. Die beiden Teile sind längs einer Bewegungsachse 5 zwischen einer ersten Endlage E1 und einer zweiten Endlage E2 relativ zueinander beweglich. Aus Vereinfachungsgründen für wird im Folgenden davon gesprochen, dass das Verbindungsteil gegenüber dem Koppelteil beweglich, etwa daran geführt ist. Die Bewegungsachse 5 verläuft im Anwendungsfall, also wenn eine Last 2 abgesenkt oder angehoben wird, in einer Vertikalrichtung. Natürlich existiert eine Vielzahl an parallelen Bewegungsachsen. Aus Gründen der Übersichtlichkeit wurde in den Abbildungen eine Bewegungsachse 5 exemplarisch gewählt, welche mit der Mittellängsachse 6 identisch ist. Beide Achsen sind in den Zeichnungen somit als eine einzige Linie dargestellt. Im Ausführungsbeispiel bildet die Bewegungsachse 5 gleichzeitig die Mittellängsachse 6 des Greifers 1. In der ersten Endlage E1 ist der Greifer insgesamt länger als in der zweiten Endlage E2 des Verbindungsteils 4. Anders ausgedrückt sind in der ersten Endlage E1 die voneinander wegweisenden Enden von Verbindungs- und Koppelteil weiter voneinander entfernt als in der zweiten Endlage E2.

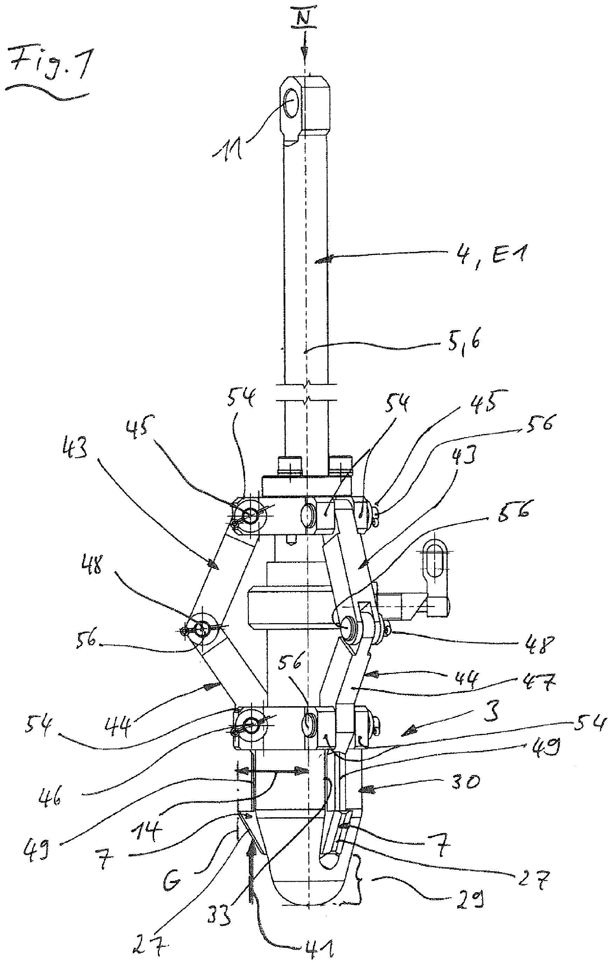

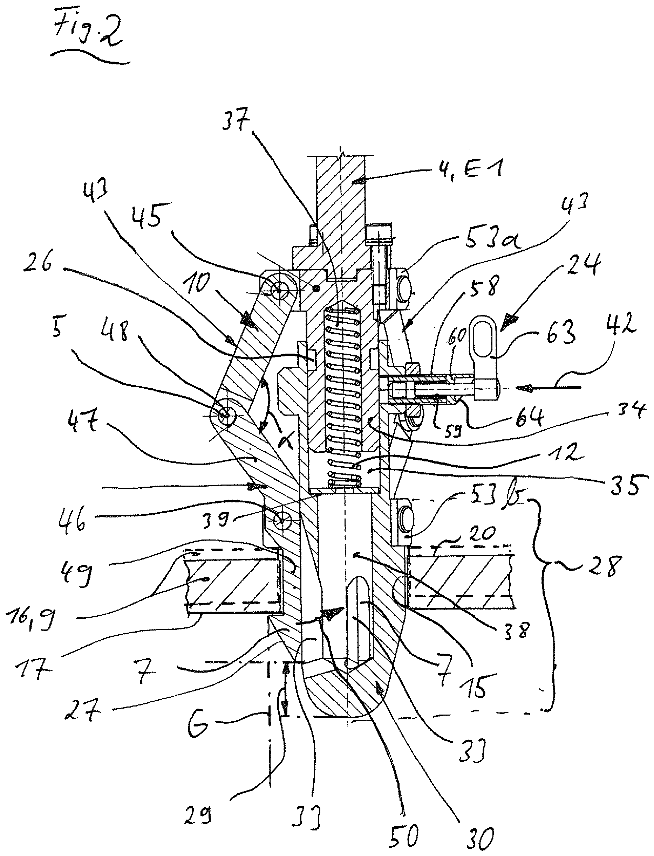

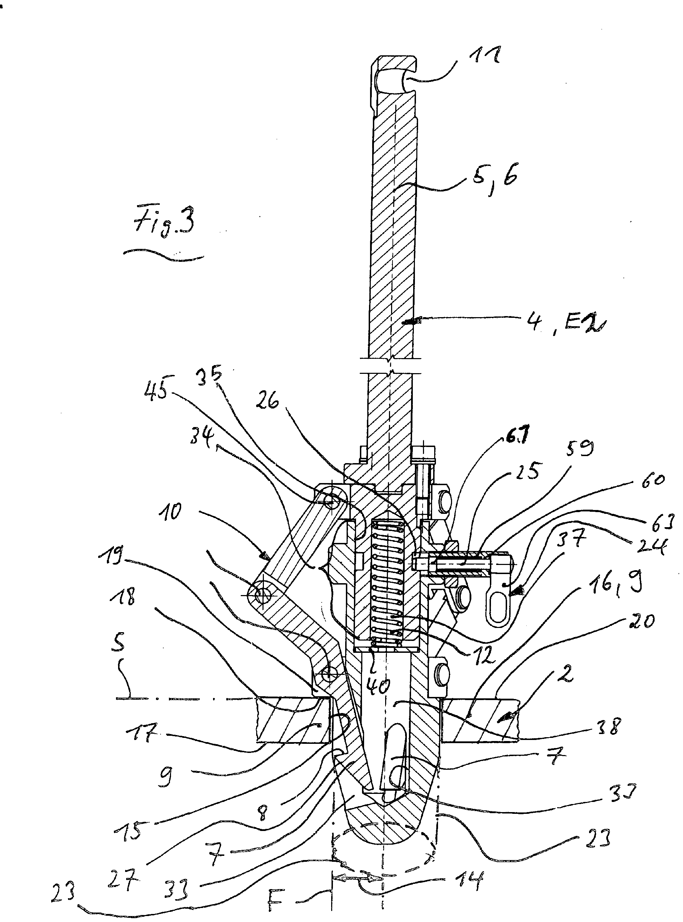

Am Koppelteil 3 sind drei Klinkenelemente 7 vorhanden, die zwischen einer Greifstellung (Fig. 1, 2) und einer Freigabestellung F (Fig. 3) beweglich sind. In der Greifstellung hintergreifen die Klinkenelemente 7 mit einer Hintergriffsfläche 8 ein Gegenelement 9 der Last 2. In der Freigabestellung F geben sie das Gegenelement 9 bzw. die Last 2 frei, d.h. der Greifer 1 kann von der Last 2 entfernt werden, wenn diese auf einer Unterlage abgesetzt ist, also ihre Soll-Position S eingenommen hat.

Die Klinkenelemente 7 sind jeweils über ein Getriebe 10 mit dem Verbindungsteil 4 im Sinne einer Bewegungskopplung verbunden, und zwar derart, dass sich in der ersten Endlage E1 die Klinkenelemente 7 in ihrer Greifstellung G und in der zweiten Endlage E2 in ihrer Freigabestellung F befinden.

Die Klinkenelemente 7 sind so am Koppelteil 3 beweglich fixiert, dass sie sich jeweils an der gleichen Axialposition befinden und den gleichen Abstand zur Mittellängsachse 6 bzw. zur Bewegungsachse 5 aufweisen. Bezüglich eines die Mittellängsachse 6 konzentrisch umgreifenden gedachten Kreises 13 sind die Klinkenelemente in Umfangsrichtung des Kreises 13 gleichmäßig voneinander beabstandet angeordnet. Weiterhin sind die Klinkenelemente 7 so am Koppelteil 3 gelagert, dass sie in der Greifstellung G einen größeren Abstand 14 zur Mittellängsachse 6 aufweisen als in der Freigabestellung F. Mit anderen Worten bewegen sich die Klinkenelemente 7 ausgehend von ihrer Freigabestellung F (Fig. 3) in ihre Greifstellung G im Bezug auf die Mittellängsachse 6 radial nach außen, also von dieser weg. Durch diese Ausgestaltung eignet sich der Greifer insbesondere dazu, in eine Aufnahmeöffnung 15 an einer Last 2 mit seinem Koppelteil 3 eingesteckt zu werden, wobei der die genannte Öffnung umgrenzende Öffnungsrand 16 bzw. Randbereich das Gegenelement 9 bildet. Die Klinkenelemente 7 hintergreifen den Öffnungsrand 16 an seiner im Anwendungsfall vertikal nach unten weisenden Seite 17. Dabei liegen die Hintergriffsflächen 8 der Klinkenelemente 7 an der Seite 17 an.

Das Verbindungsteil 4 ist in seine erste Endlage E1 vorgespannt, wobei hierzu ein Federelement, vorzugsweise eine Schraubendruckfeder 12 vorhanden ist, welche sich einerseits am Koppelteil 3 und andererseits am Verbindungsteil 4 abstützt. Damit das Getriebe 10 wirksam werden und die Klinkenelemente 7 aus ihrer Greifstellung G in ihre Freigabestellung F bewegen kann, muss die Kraft des Federelements überwunden werden. Dazu ist es zunächst erforderlich, dass das Koppelteil 3 hinsichtlich der Bewegungsachse 5 bzw. der Mittellängsachse 6 axialfest gehalten wird. Dazu ist ein eine Anschlagfläche 18 aufweisender Anschlag 19 am Koppelteil angebracht. Der Anschlag 19 ist so ausgestaltet und positioniert, dass er in der Sollposition einer Last 2 und bei fortgesetzter Abwärtsbewegung des Greifers 1 mit seiner Anschlagfläche 18 an der Last 2 anstößt. Im Falle einer den vorderen Abschnitt des Koppelteils 3 aufnehmenden Aufnahmeöffnung 15 erstreckt sich die Anschlagfläche 18 - bezogen auf die Mittellängsachse 6 - soweit radial nach außen, dass sie den Öffnungsrand 16 überlappt und an dessen im Anwendungsfall nach oben weisenden Oberseite 20 anliegt (siehe Fig. 3).

Sobald der Anschlag 19 am Gegenelement 9 anliegt, bewirkt eine Bewegung des Verbindungsteils 4 vertikal nach unten, dass durch Vermittlung des Getriebes 10 die Klinkenelemente 7 in ihre Freigabestellung bewegt werden. In dieser ist, wie bereits gesagt, der Abstand zur Mittellängsachse 6 gegenüber der Greifstellung G so verringert, dass die Klinkenelemente 7 bzw. ihre Hintergriffsflächen 8 innerhalb eines die Klinkenelemente 7 umschreibenden Umkreises 23 angeordnet sind, dessen Durchmesser kleiner ist als der Durchmesser der Aufnahmeöffnung 15. In der beschriebenen Stellung kann dann der Greifer 1 bzw. das Koppelteil 3 aus der Aufnahmeöffnung 15 nach oben herausgezogen werden. Dabei muss das Koppelteil 3 in seiner zweiten Endlage E2 gehalten werden, was auf unterschiedliche Weise erfolgen kann, insbesondere durch eine das Verbindungsteil 4 in seiner zweiten Endlage E2 lösbar fixierende Rasteinrichtung 24.

Die Rasteinrichtung 24, die am Koppelteil 3 fixiert ist, umfasst ein quer zur Bewegungsachse 5 bzw. zur Mittellängsachse 6 bewegliches Rastelement 25, welches in der zweiten Endlage E2 des Verbindungsteils 4 in eine Ausnehmung 26 des Verbindungsteils 4 eingreift.

Der Greifer 1 wird z.B. mit sich in der Freigabestellung F befindlichen Klinkenelementen 7 an eine Last 2 angekoppelt, indem das Vorderende des Koppelteils 3 in deren Aufnahmeöffnung 15 eingeführt wird. Die Freigabestellung der Klinkenelemente ist dabei mit Hilfe der Rasteinrichtung 24 fixiert. Wenn der Anschlag 19 am Gegenelement 9 anstößt, wird die durch die Rasteinrichtung 24 bewirkte Fixierung gelöst, wodurch das Verbindungsteil 4 durch das Federelement bzw. die Schraubendruckfeder 12 vertikal nach oben in seine erste Endlage E1 und die Klinkenelemente 7 in ihre Greifstellung G bewegt werden. Es liegt dann eine Situation entsprechend Fig. 2 vor. Eine solche Vorgehensweise bietet sich an, wenn eine Last 2 angehoben werden soll, die sich an einer nur schwer einsehbaren Stelle befindet.

Bei einer alternativen Ankoppelvariante befindet sich das Verbindungsteil 4 in seiner ersten Endlage E1, d.h. die Klinkenelemente 7 sind in ihrer Greifstellung G, das in Eingriffsrichtung 42 vorgespannte Rastelement 25 drückt gegen eine Umfangsfläche des Verbindungsteils 3, steht jedoch nicht in Eingriff mit der Ausnehmung 26. Um das Einführen des Koppelteils 3 in die Aufnahmeöffnung 15 der Last 2 zu erleichtern, weisen die Klinkenelemente 7 an ihrem vom Verbindungsteil 4 wegweisenden Ende eine Betätigungsschräge 27 auf. Deren Schrägstellung ist so gewählt, dass die Klinkenelemente 7 bei Beaufschlagung mit einer vertikal nach oben gerichteten Kraft 41, wie dies beim Auftreffen der Betätigungsschrägen auf den Öffnungsrand 16 der Aufnahmeöffnung 15 der Fall ist, radial nach innen in ihre Freigabestellung F bewegt werden.

Eine weitere Erleichterung des Einführens des Koppelteils in eine Aufnahmeöffnung 16 wird dadurch bewerkstelligt, dass der vom Verbindungsteil wegweisende Endabschnitt 28 des Koppelteils 3 in Form eines sich zu seinem Freiende hin verjüngenden, axial über die Klinkenelemente 7 mit einem Überstand 29 in Richtung der Bewegungsachse 5 hinausragenden Zentrierbolzens 30 ausgestaltet ist. Im Zentrierbolzen 30 sind in dessen Umfangsrichtung verteilte Ausnehmungen 33 vorhanden, in welche jeweils ein Klinkenelement 7 in seiner Freigabestellung F zumindest teilweise eintaucht.

Das Koppelteil 3 und das Verbindungsteil 4 sind mit Hilfe einer Teleskopführung beweglich aneinander fixiert. Das Verbindungsteil 4 weist dazu an einem dem Koppelteil 3 zugewandten Endbereich einen z.B. zylindrischen Führungsabschnitt 34 auf. In dem dem Verbindungsteil 4 zugewandten Endabschnitt des Koppelteils 3 ist eine komplementär zum Führungsabschnitt 34 ausgestaltete Aufnahme 35 vorhanden, in welche der Führungsabschnitt 34 axial verschiebbar gehalten ist. Der Führungsabschnitt 34 weist einen zentralen, sich in dessen im Anwendungsfall nach unten weisende Stirnseite 36 ausmündenden Federraum 37 auf, in welchem die Schraubendruckfeder 12 angeordnet ist. Die Aufnahme 35 setzt sich in ein zum unteren Ende des Koppelteils 3 hin erstreckenden Sackloch 38 fort. Dieses ist gegenüber der Aufnahme 35 verengt, wobei zwischen ihm und der Aufnahme 35 eine nach oben weisende Radialschulter 39 vorhanden ist. Auf dieser liegt eine Stützscheibe 40 auf, an welcher das eine Ende der Schraubendruckfeder 12 anliegt. Das andere Ende der Schraubendruckfeder 12 stützt sich an dem Boden der Aufnahme 35 ab.

Die Getriebe 10 sind als Koppelgetriebe, insbesondere als Hebelgetriebe ausgestaltet. Sie umfassen einen einarmigen Hebel 43, der mit seinem einen Ende über ein erstes Gelenk 45 mit dem Verbindungsteil 4 verbunden ist, und einen zweiarmigen Hebel 44, der über ein zweites Gelenk 46 mit dem Koppelteil 3 verbunden ist. Der zweiarmige Hebel 44 umfasst einen Kraftarm 47, dessen Freiende über ein drittes Gelenk 48 mit dem anderen Ende des einarmigen Hebels 43 verbunden ist, und einen Lastarm 49, an dessen Freiende jeweils ein Klinkenelement 7 fixiert, insbesondere einstückig angeformt ist. Die die Klinkenelemente 7 in ihrer Freigabestellung F aufnehmenden Ausnehmungen 33 sind so bemessen, dass sie jeweils die Lastarme 49 mit ihren daran befindlichen Klinkenelementen 7 aufnehmen können. Der einarmige Hebel 43 und der Kraftarm 47 schließen einen sich zur Mittellängsachse 6 hin öffnenden stumpfen Winkel ein, der kleiner 180° ist. Wenn beim Absenken einer Last 2 diese ihre Sollposition erreicht hat, stößt bei fortgesetzter Bewegung des Verbindungsteils nach unten der Anschlag 19 mit seiner Anschlagfläche 18 am Gegenelement 9 der Last 2 an. Dadurch schwenkt der Lastarm 49 zur Mittellängsachse 6 hin (siehe Pfeil 50 in Fig. 2).

Die ersten Gelenke 45 und die zweiten Gelenke 46 sind jeweils an einem Bund 53a, 53b angeordnet welcher den Außenumfang des Verbindungsteils 4 bzw. des Koppelteils 3 klemmend umgreift. Die Bünde 53a, b weisen jeweils drei in Umfangsrichtung gesehen gleich beabstandete Vorsprünge 54 auf, an welchen die ersten und zweiten Gelenke 45, 46 angeordnet sind. Die Bünde 53a, b sind von insgesamt drei Stegen 55 gebildet, deren Freienden die Vorsprünge 54 bilden und einen von der Mittellängsachse 6 wegweisenden Winkel β von etwa 120° einschließen. Zwischen zwei sich in Umfangsrichtung benachbarten Vorsprüngen 54 ist im Falle des Bunds 53a jeweils das vom zweiarmigen Hebel 44 wegweisende Ende des einarmigen Hebels 43, und im Falle des Bunds 53b jeweils ein zweiarmiger Hebel 44 mit seinem mittleren Bereich angeordnet. Die Gelenke 45, 46 und 48 sind Scharniergelenke. Sie weisen einen die Vorsprünge 54 und die Hebel 43 und 44 durchsetzenden Gelenkzapfen 56 auf.

Die Rasteinrichtung 24 umfasst ein am Koppelteil angeordnetes zylindrisches Gehäuse 58 in welchem das zapfenförmig ausgestaltete Rastelement 25 beweglich gelagert ist, und zwar derart, dass sich seine Bewegungsrichtung quer zur Mittellängsachse 6 bzw. zur Bewegungsachse 5 erstreckt. Die Vorspannung in Eingriffsrichtung 42 wird mit Hilfe einer das Rastelement 25 koaxial umgreifenden Schraubendruckfeder 59 bewerkstelligt. Deren in Bezug auf die Mittellängsachse 6 radial außen liegendes Ende stützt sich an einer Radialschulter 60 des Gehäuses 58 ab. Das andere Ende der Schraubendruckfeder 59 beaufschlagt einen über den Außenumfang des Rastelements 25 vorstehenden Flansch 61. Das radial außen liegende Ende des Rastelements 25 ist mit einem sich quer zu dessen Längsrichtung erstreckenden Drehhebel 63 verbunden. Der Drehhebel 63 wirkt mit einer Schrägkulisse 64 am radial äußeren Ende des Gehäuses 58 zusammen. In der in Fig. 3 gezeigten Situation weist der Drehhebel 63 nach unten. Wenn bei dieser Drehstellung das Verbindungsteil 4 sich in seiner ersten Endlage (Fig. 1) befindet, liegt das Rastelement 25 mit seinem radial innen liegenden Ende an einen unterhalb der Ausnehmung 26 liegenden Bereich des Führungsabschnitts 34 an. Wird das Verbindungsteil 4 in seine zweite Endlage E2 gebracht, rastet das Rastelement 25 aufgrund der Beaufschlagung durch die Schraubendruckfeder 59 selbsttätig in die Ausnehmung 26 ein. Weist der Drehhebel nach oben (Fig. 1 und 2), ist das Rastelement 25 in einer Lage fixiert, in der sein radial innen liegendes Ende vom Führungsabschnitt 34 radial entfernt ist, diesen also nicht beaufschlagt. Eine automatische Arretierung des Verbindungsteils 4 in seiner zweiten Endlage E2 ist somit nicht gegeben.

## Patentansprüche

1. Greifer zum Heben und Senken von Lasten, mit folgender Ausgestaltung:
- er umfasst ein zum Ankoppeln an eine Last (2) dienendes Koppelteil (3) und ein zum Verbinden mit einem Anschlagmittel dienendes Verbindungsteil (4),
- das Verbindungsteil ist am Koppelteil längs einer Bewegungsachse (5) zwischen einer ersten Endlage (E1) und einer zweiten Endlage (E2) beweglich geführt, wobei in der ersten Endlage die von einander wegweisenden Enden der genannten Teile weiter voneinander entfernt sind als in der zweiten Endlage,
- am Koppelteil (3) sind wenigstens zwei Klinkenelemente (7) vorhanden, die zwischen einer Greifstellung (G), in der sie mit einer Hintergriffsfläche (8) ein Gegenelement (9) der Last (2) hintergreifen, und einer Freigabestellung (F), in der sie das Gegenelement freigeben, beweglich sind,
- das Verbindungsteil (4) ist mit den wenigstens zwei Klinkenelementen (7) über wenigstens ein Getriebe (10) derart verbunden, dass sich in der ersten Endlage (E1) die Klinkenelemente in ihrer Greifstellung (G) und in der zweiten Endlage (E2) in ihrer Freigabestellung (F) befinden,
- die wenigstens zwei Klinkenelemente (7) sind bezüglich eines eine parallel zur Bewegungsachse (5) verlaufenden Mittellängsachse (6) des Greifers (1) konzentrisch umfassenden gedachten Kreises (13) in dessen Umfangsrichtung voneinander beabstandet angeordnet,
- in der Greifstellung (G) weisen die Klinkenelemente (7) einen größeren Abstand (14) zur Mittellängsachse (5) auf als in der Freigabestellung (F), **dadurch gekennzeichnet, dass** ein
- vom Verbindungsteil (4) weg weisender Endabschnitt (28) des Koppelteils (3) in Form eines sich zu seinem Freiende verjüngenden, axial über die Klinkenelemente (7) mit einem Überstand (29) in Richtung der Mittellängsachse (6) hinaus ragenden Zentrierbolzens (30) ausgestaltet ist.

2. Greifer nach Anspruch 1, **dadurch gekennzeichnet, dass** der Zentrierbolzen (30) in Richtung seines Umfangs verteilte Ausnehmungen aufweist, in welche jeweils ein Klinkenelement (7) in seiner Freigabestellung (F) zumindest teilweise eintaucht.

3. Greifer nach Anspruch 1 oder 2, **dadurch gekennzeichnet, dass** das Verbindungsteil (4) in seine erste Endlage (E1) vorgespannt ist.

4. Greifer nach Anspruch 3, **gekennzeichnet durch** ein sich einerseits am Koppelteil (3) und andererseits am Verbindungsteil (4) abstützendes Federelement.

5. Greifer nach Anspruch 4, **dadurch gekennzeichnet, dass** das Federelement eine Schraubendruckfeder (12) ist.

6. Greifer nach einem der vorhergehenden Ansprüche, **gekennzeichnet durch** einen am Koppelteil (3) angeordneten, eine Anschlagfläche (18) aufweisenden Anschlag (19), der so ausgestaltet und positioniert ist, dass er bei auf einer Unterlage ruhender Last (2) und fortgesetzter Abwärtsbewegung des Greifers (1) mit seiner Anschlagfläche an der Last anliegt.

7. Greifer nach einem der vorhergehenden Ansprüche, **dadurch gekennzeichnet, dass** die Klinkenelemente (7) an ihrem vom Verbindungsteil (4) weg weisenden Ende eine Betätigungsschräge (27) aufweisen, deren Schrägstellung so gewählt ist, dass bei ihrer Beaufschlagung mit einer nach oben und in Richtung der Bewegungsachse (5) wirkenden Kraft (41) die Klinkenelemente (7) in ihre Freigabestellung (F) bewegt werden.

8. Greifer nach einem der vorhergehenden Ansprüche, **gekennzeichnet durch** ein Getriebe (10), welches die lineare Bewegung des Verbindungsteils (4) in eine Drehbewegung des Klinkenelements (7) umwandelt.

9. Greifer nach Anspruch 8, **dadurch gekennzeichnet, dass** das Getriebe (10) ein Hebelgetriebe ist.

10. Greifer nach Anspruch 8 oder 9, **dadurch gekennzeichnet, dass** jedes Klinkenelement (7) mit dem Verbindungsteil (4) über ein Getriebe (10) verbunden ist.

11. Greifer nach Anspruch 10, **dadurch gekennzeichnet, dass** das Getriebe einen mit seinem Ende über ein erstes Gelenk (45) mit dem Verbindungsteil (4) verbundenen einarmigen Hebel (43) und einen über ein zweites Gelenk (46) mit dem Koppelteil (3) verbundenen zweiarmigen Hebel (44) umfasst, wobei der Kraftarm (47) des zweiarmigen Hebels (44) über ein drittes Gelenk (48) mit dem anderen Ende des einarmigen Hebels (43) verbunden ist, und der Lastarm (49) des zweiarmigen Hebels (44) an seinem Freiende ein Klinkenelement (7) trägt.

12. Greifer nach Anspruch 11, **dadurch gekennzeichnet, dass** die Gelenke (45, 46, 48) Scharniergelenke sind.

13. Greifer nach einem der vorhergehenden Ansprüche, **gekennzeichnet durch** eine das Verbindungsteil (4) in seiner zweiten Endlage (E2) lösbar fixierende Rasteinrichtung (24).

14. Greifer nach Anspruch 13, **dadurch gekennzeichnet, dass** die Rasteinrichtung (24) ein am Koppelteil (3) oder am Verbindungsteil (4) quer zur Bewegungsrichtung (5) beweglich gelagertes Rastelement (25) umfasst, welches in der zweiten Endlage (E2) in eine Ausnehmung (26) des jeweils anderen Teils eingreift.

15. Greifer nach Anspruch 14, **dadurch gekennzeichnet, dass** das Rastelement (25) in Eingriffsrichtung (42) vorgespannt ist.

16. Greifer nach einem der vorhergehenden Ansprüche, **gekennzeichnet durch** eine Teleskopführung zwischen Koppelteil (3) und Verbindungsteil (4).

17. Greifer nach Anspruch 16, **dadurch gekennzeichnet, dass** das Koppelteil (3) oder das Verbindungsteil (4) eine axial verlaufende Ausnehmung (35) aufweist, in welcher das jeweils andere Teil mit einem Führungsabschnitt (34) axial beweglich geführt ist.

## Claims

1. Gripper for raising and lowering loads, having the following design:
- it comprises one coupling part (3) serving for coupling to a load (2) and a connecting part (4) serving for connecting to a stop means.
- the connecting part is movably guided on the coupling part along a movement axis (5) between a first end position (E1) and a second end position (E2), wherein in the first end position, the two ends of said parts which point away from each other are more distant from each other than in the second end position,
- at least two latch elements (7) are present on the coupling part (3), which can be moved between a gripping position (G), in which they engage behind a counter element (9) of the load (2) with an engaging surface (8), and a release position (F), in which they release the counter element,
- the connecting part (4) is connected to the at least two latch elements (7) via at least one transmission (10) in such a way that the latch elements are located in their gripping position (G) in the first end position (E1), and in their release position (F) in the second end position (E2),
- the at least two latch elements (7) are arranged spaced apart from one another with respect to an imaginary circle (13) in its circumferential direction, said imaginary circle (13) concentrically surrounding a central longitudinal axis (6) of the gripper (1) running parallel to the movement axis (5),
- the latch elements (7) are at a greater distance (14) from the central longitudinal axis (5) in the gripping position (G) than in the release position (F),
**characterised in that** an end portion (28) of the coupling part (3), said end portion (28) pointing away from the connecting part (4), is designed in the form of a centring pin (30) which tapers towards its free end and projects axially beyond the latch elements (7) with a protrusion (29) in the direction of the central longitudinal axis (6).

2. Gripper according to claim 1, **characterised in that** the centring pin (30) has recesses distributed in the direction of its periphery, into each of which a latch element (7) plunges at least partially in its release position (F).

3. Gripper according to claim 1 or 2, **characterised in that** the connecting part (4) is prestressed in its first end position (E1).

4. Gripper according to claim 3, **characterised by** a spring element which is supported on one side on the coupling part (3) and on the other side on the connecting part (4).

5. Gripper according to claim 4, **characterised in that** the spring element is a helical compression spring (12).

6. Gripper according to one of the preceding claims, **characterised by** a stop (19) arranged on the coupling part (3) and having a stop surface (18), said stop (19) being designed and positioned such that it contacts the load with its stop surface when there is load (2) resting on a support and continued downward movement of the gripper (1).

7. Gripper according to one of the preceding claims, **characterised in that** the latch elements (7) have an actuating bevel (27) on their end which points away from the connecting part (4), whose inclination is selected such that the latch elements (7) are moved into their release position (F) when they are subjected to a force (41) acting upwardly and in the direction of the movement axis (5).

8. Gripper according to one of the preceding claims, **characterised by** a transmission (10) which converts the linear movement of the connecting part (4) into a rotational movement of the latch element (7).

9. Gripper according to claim 8, **characterised in that** the transmission (10) is a lever transmission.

10. Gripper according to claim 8 or 9, **characterised in that** each latch element (7) is connected to the connecting part (4) via a transmission (10).

11. Gripper according to claim 10, **characterised in that** the transmission comprises a one-armed lever (43) which is connected with its end to the connecting part (4) via a first joint (45) and a two-armed lever (44) which is connected to the coupling part (3) via a second joint (46), wherein the power arm (47) of the two-armed lever (44) is connected to the other end of the one-armed lever (43) via a third joint (48), and the load arm (49) of the two-armed lever (44) carries a latch element (7) on its free end.

12. Gripper according to claim 11, **characterised in that** the joints (45, 46, 48) are hinge joints.

13. Gripper according to one of the preceding claims, **characterised by** a locking device (24) detachably fixing the connecting part (4) in its second end position (E2).

14. Gripper according to claim 13, **characterised in that** the locking device (24) comprises a locking element (25) which is moveably mounted transversely to the direction of movement (5) on the coupling part (3) or on the connecting part (4), said locking element (25) engaging with a recess (26) of the respective other part in the second end position (E2).

15. Gripper according to claim 14, **characterised in that** the locking element (25) is prestressed in the direction of engagement (42).

16. Gripper according to one of the preceding claims, **characterised by** a telescopic guide between the coupling part (3) and connecting part (4).

17. Gripper according to claim 16, **characterised in that** the coupling part (3) or the connecting part (4) has an axially running recess (35) in which the respective other part is axially moveably guided with a guide portion (34).

## Revendications

1. Dispositif de préhension permettant de soulever et d'abaisser des charges et présentant la configuration suivante :
- il comprend une partie accouplement (3) servant à l'accouplement à une charge (2) et une partie assemblage (4) servant à l'assemblage avec une élingue,
- la partie assemblage est mobile sur la partie accouplement le long d'un axe de déplacement (5) entre une première position de fin de course (E1) et une deuxième position de fin de course (E2), les extrémités opposées l'une à l'autre des parties ci-dessus étant plus éloignées l'une de l'autre dans la première position de fin de course que dans la deuxième position de fin de course,
- la partie accouplement (3) est muni d'au moins deux éléments d'encliquetage (7) mobiles entre une position de préhension (G) dans laquelle ils viennent en prise par l'arrière avec une surface de prise (8) d'un élément complémentaire (9) de la charge (2) et une position de dégagement (F) dans laquelle ils libèrent l'élément complémentaire,
- la partie assemblage (4) est reliée à au moins deux éléments d'encliquetage (7) par au moins un mécanisme (10) de telle manière que les éléments d'encliquetage (7) se trouvent dans leur position de prise (G) dans la première position de fin de course (E1) et se trouvent dans leur position de dégagement (F) dans la deuxième position de fin de course (E2),
- les au moins deux éléments d'encliquetage (7) sont agencés à distance l'un de l'autre par rapport à un cercle imaginaire (13) entourant concentriquement dans sa direction circonférentielle un axe longitudinal médian (6) du dispositif de préhension (1) parallèle à l'axe de déplacement (5),
- les éléments d'encliquetage (7) se trouvent à une plus grande distance (G) de l'axe longitudinal médian (6) dans la position de prise (G) que dans la position de dégagement (F),
**caractérisé en ce qu'**un tronçon d'extrémité (28) de la partie assemblage (4), tourné vers l'extérieur de la partie accouplement (3), est configuré en forme de boulon de centrage (30) se rétrécissant en direction de son extrémité libre et dépassant axialement les éléments d'encliquetage (7) avec un porte-à-faux (29) en direction de l'axe longitudinal médian (6).

2. Dispositif de préhension selon la revendication 1, **caractérisé en ce que** le boulon de centrage (30) présente des évidements répartis en direction de sa circonférence dans lesquels plonge, du moins en partie, un élément d'encliquetage (7) dans sa position de dégagement (F).

3. Dispositif de préhension selon la revendication 1 ou 2, **caractérisé en ce que** la partie assemblage (4) est précontrainte dans sa première position de fin de course (E1).

4. Dispositif de préhension selon la revendication 3, **caractérisé par** un élément de ressort s'appuyant, d'une part, sur la partie accouplement (3) et, d'autre part, sur la partie assemblage (4).

5. Dispositif de préhension selon la revendication 4, **caractérisé en ce que** l'élément de ressort est un ressort de compression (12).

6. Dispositif de préhension selon l'une quelconque des revendications précédentes, **caractérisé par** une butée (19) disposée sur la partie accouplement (3) et présentant une face de butée (18), laquelle butée est configurée et positionnée de manière à plaquer, avec sa face de butée, contre la charge (2) lorsque la charge (2) repose sur un support et lors du mouvement continu vers le bas de l'élément de préhension (1).

7. Dispositif de préhension selon l'une quelconque des revendications précédentes, **caractérisé en ce que** les éléments d'encliquetage (7) présentent, sur leur extrémité dirigée vers l'extérieur de la partie assemblage (4), un chanfrein d'actionnement (27) dont la déclivité est choisie de telle façon que, lorsqu'il est soumis à une force (41) agissant vers le haut et en direction de l'axe de déplacement (5), les éléments d'encliquetage (7) soient déplacés vers leur position de dégagement (F).

8. Dispositif de préhension selon l'une quelconque des revendications précédentes, **caractérisé par** un mécanisme (10) qui transforme le déplacement linéaire de la partie assemblage (4) en un déplacement rotatif de l'élément d'encliquetage (7).

9. Dispositif de préhension selon la revendication 8, **caractérisé en ce que** le mécanisme (10) est un mécanisme à levier.

10. Dispositif de préhension selon la revendication 8 ou 9, **caractérisé en ce que** chaque élément d'encliquetage (7) est relié à la partie assemblage (4) par le biais d'un mécanisme (10).

11. Dispositif de préhension selon la revendication 10, **caractérisé en ce que** le mécanisme comprend un levier (43) à un seul bras relié par son extrémité, à la partie assemblage (4) par le biais d'une première articulation (45) et un levier (44) à deux bras relié à la partie accouplement (3) par le biais d'une deuxième articulation (46), le bras de force (47) du levier (44) à deux bras est relié à l'autre extrémité du levier (43) à un seul bras par le biais d'une troisième articulation (48), et le bras de charge (49) du levier (44) à deux bras porte, sur son extrémité libre, un élément d'encliquetage (7).

12. Dispositif de préhension selon la revendication 11, **caractérisé en ce que** les articulations (45, 46, 48) sont des articulations à charnière.

13. Dispositif de préhension selon l'une quelconque des revendications précédentes, **caractérisé par** un dispositif d'engrènement (24) immobilisant de manière amovible la partie assemblage (4) dans sa deuxième position de fin de course (E2).

14. Dispositif de préhension selon la revendication 13, **caractérisé en ce que** le dispositif d'engrènement (24) comprend un élément d'engrènement (25) positionné de manière mobile transversalement au sens de déplacement (5) sur la partie accouplement (3) ou sur la partie assemblage (4), lequel élément d'engrènement entre en prise, dans sa deuxième position de fin de course (E2), dans un évidement (26) de l'autre partie respective.

15. Dispositif de préhension selon la revendication 14, **caractérisé en ce que** l'élément d'engrènement (25) est précontraint dans le sens de l'entrée en prise (42).

16. Dispositif de préhension selon l'une quelconque des revendications précédentes, **caractérisé par** un dispositif de guidage télescopique entre la partie accouplement (3) et la partie assemblage (4).

17. Dispositif de préhension selon la revendication 16, **caractérisé en ce que** la partie accouplement (3) ou la partie assemblage (4) présente un évidement axial (35) dans lequel l'autre partie est guidée de manière axialement mobile avec un tronçon de guidage (34).
